# FASCICULE DE BREVET EUROPEEN

(11) **EP 2 212 547 B1**
(45) Date de publication et mention de la délivrance du brevet: **09.12.2015**
(21) Numéro de dépôt: 08847392.1
(22) Date de dépôt: 31.10.2008
(51) Int. Cl.: F03B 13/00, F01D 15/10, F01D 15/12, F03B 17/02

(54) **TURBINE HYDROÉLECTRIQUE À IMPULSION COMPRENANT DES BUSES ROTATIVES**
HYDROELEKTRISCHE ANTRIEBSTURBINE MIT ROTATIONSDÜSEN
IMPULSE HYDROELECTRIC TURBINE COMPRISING ROTATING NOZZLES

(30) Priorité: 05.11.2007 CA 2604610
(43) Date de publication de la demande: 04.08.2010
(73) Titulaire: Frangié, Nabil H., Montreal, Quebec H2R 1J7 (CA)
(72) Inventeur: Frangié, Nabil H., Montreal, Quebec H2R 1J7 (CA)
(74) Mandataire: L'Helgoualch, Jean
(86) Numéro de dépôt international: PCT/CA2008/001897
(87) Numéro de publication internationale: WO 2009/059398

(56) Documents cités:
- JP-A- S5 634 977
- US-A- 171 256
- US-A- 2 060 414
- US-A- 3 926 534
- US-A- 5 263 814
- US-A- 5 263 814

## Description

L'augmentation de la demande en énergie a poussé les prix du pétrole à la hausse et a aggravé les problèmes d'environnement déjà existants.

Les énergies renouvelables, tant éolienne que solaire, ne parviennent pas, pour diverses raisons, à répondre à une augmentation aussi forte de la demande. L'énergie nucléaire a la possibilité de le faire, mais cela passe par des investissements financiers importants, et rencontre des problèmes de sécurité et d'impopularité qui ne se démentent pas.

La présente invention entend offrir une machine qui produit du courant électrique à un prix relativement modéré et sans aucune nuisance pour l'environnement.

La machine selon l'invention vise à produire du courant électrique en utilisant simultanément les propriétés d'un jet d'eau sortant de l'orifice d'un tuyau à une certaine vitesse, après avoir été captée à une certaine hauteur, allant, par exemple, de cinquante à mille cinq cents mètres. L'eau sortant alors de l'orifice d'un tuyau a deux forces : une force de réaction, lorsqu'elle quitte le tuyau, et une force d'impulsion, lorsque la même eau heurte les pales d'une turbine. Cette deuxième propriété est exploitée dans les installations de production électrique utilisant des turbines Pelton, par exemple. Une turbine hydroélectrique à impulsion est connue de US 5263814.

La machine selon l'invention comprend un premier ensemble rotatif composé d'au moins deux tuyaux horizontaux, allant dans deux directions diamétralement opposées, et coudés dans leurs extrémités de telle sorte que les jets d'eau sortant de leurs orifices suivent deux directions opposées et parallèles. Les tuyaux horizontaux sont solidaires d'un lest destiné à ralentir la vitesse de la rotation engendrée par la sortie de l'eau à une certaine vitesse des orifices de ces tuyaux. De même, ces tuyaux horizontaux sont solidaires d'une barre qui passe sous eux et qui porte en son centre un axe qui va vers le bas orthogonalement et rejoint une boîte multiplicatrice d'engrenages dont l'axe de sortie actionne le rotor d'un premier générateur.

En outre, la machine selon l'invention comprend un deuxième ensemble rotatif composé de pales, orientées vers l'intérieur du cercle qu'elles forment. Ces pales sont portées par des supports, eux-mêmes portés par des rayons allant vers le centre du cercle formé par les pales. A une faible distance de ce centre, les rayons portent un cylindre creux qui va vers le bas perpendiculairement. Ce cylindre creux, qui est assez large pour laisser passer l'axe porté par la barre horizontale, porte à son extrémité inférieure une première roue dentée qui actionne une deuxième roue dentée dont l'axe rejoint une deuxième boîte multiplicatrice d'engrenages dont l'axe de sortie actionne le rotor d'un deuxième générateur.

Enfin, la machine selon l'invention comprend des moyens de stabilisation des différents axes qu'elle contient et des moyens d'alimentation en courant électrique.

Les figures du dessin annexé feront bien comprendre comment l'invention peut être réalisée. Il convient de souligner que, du fait du très grand nombre de réalisations possibles de la machine selon l'invention, ces figures ne représentent pas le dessin à une échelle donnée. Il en résulte donc que les figures du dessin annexé représentent la machine selon l'invention d'une manière schématique et complète, sans se plier aux contraintes d'une installation particulière.
La figure 1 est une vue de haut de la machine selon l'invention.
La figure 2 représente une vue en coupe de la machine selon l'invention suivant l'axe I-II présenté dans la figure 1. Il est à noter que certains éléments n'ont pas été représentés dans cette figure, comme deux colonnes dont la présence ne ferait qu'encombrer une figure déjà bien remplie.
La figure 3 représente la manière dont sont disposés les pales, les supports et les rayons utilisés dans la machine selon l'invention.
La figure 4 est un agrandissement du cadre "A" dessiné en pointillé dans la figure 2 ; elle représente en détail les systèmes de fixation et de stabilisation des axes utilisés dans la machine selon l'invention.

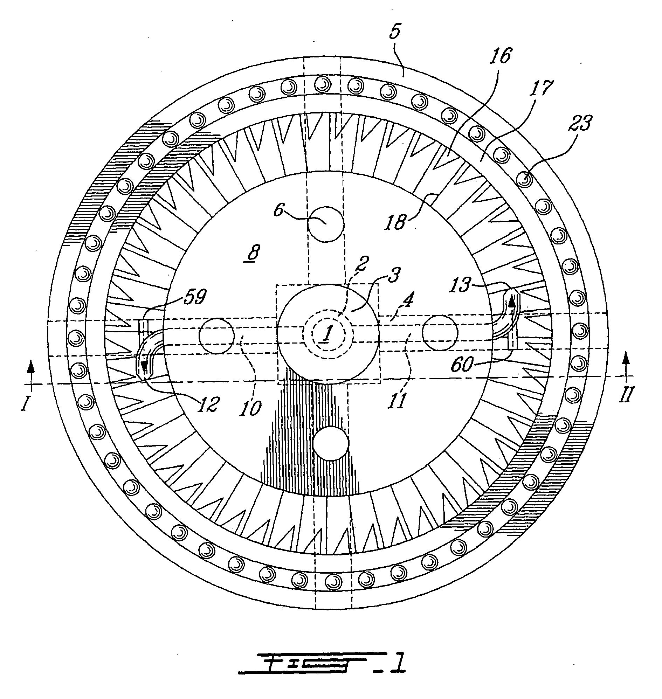

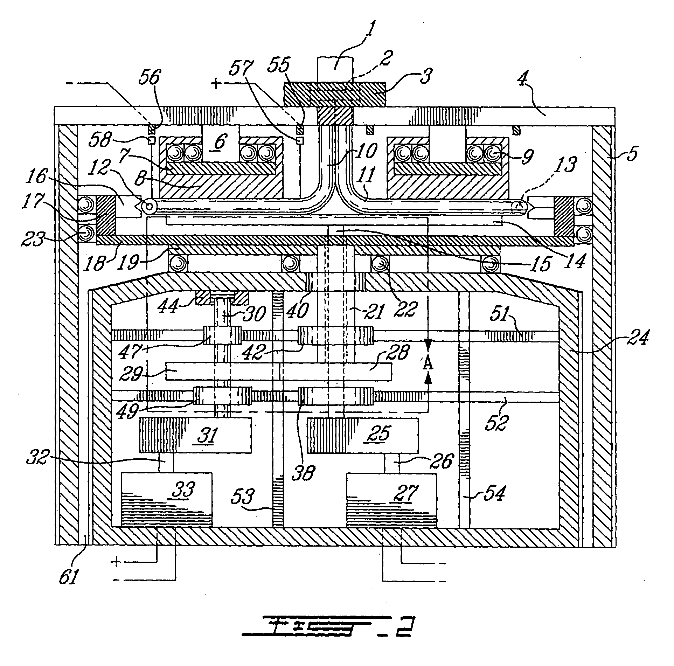

La machine selon l'invention comprend un tuyau 1 (figures 1,2) d'arrivée de l'eau captée d'une hauteur suffisante pour faire fonctionner une turbine Pelton. Le tuyau 1 est fixe. A son arrivée dans la machine selon l'invention, le tuyau 1 se prolonge par un joint rotatif 2 qui est porté par un support 3 qui repose sur quatre poutres 4, en acier par exemple, elles-mêmes soutenues par une première structure 5, cylindrique au moins dans sa partie supérieure. Cette première structure peut être faite en acier, par exemple. Le nombre de tuyaux ou de poutres n'est pas limitatif.

Des poutres 4 (figure 2) descendent sur une petite distance quatre colonnes 6 dont la base élargie forme une couronne circulaire 7. Sur ses bords intérieur et extérieur, cette couronne circulaire 7 porte un lest 8 dont les bras en potence se referment sur des roulements 9. Ces roulements 9 ont pour fonction de réduire au maximum les frottements lorsque la machine selon l'invention est en marche, et de supporter des charges. Par conséquent, les roulements 9, ainsi que tous les autres roulements utilisés dans la machine selon l'invention, peuvent être à billes, à aiguilles ou encore à rouleaux.

A la sortie du joint rotatif 2 (figures 1,2), l'eau amenée par le tuyau 1 est acheminée par deux autres tuyaux 10,11 (figures 1,2), qui sont d'abord verticaux, puis ils sont coudés une première fois à angle droit (figure 2) pour devenir horizontaux et aller dans deux directions diamétralement opposées, et encore coudés une fois, dans le même plan, à leurs extrémités, de telle sorte que les orifices de sortie 12,13 des tuyaux 10,11, soient orientés dans deux directions parallèles et opposées (figure 1). Les tuyaux 10,11, passent sous le lest 8 auquel ils sont fixés, et dépassent ce lest 8 de façon à dégager leur partie coudée.

Sous leur partie horizontale, les tuyaux 10,11 (figure 2), portent une barre 14 en acier, par exemple, qui est solidaire d'eux ainsi que du lest 8. Du centre de la barre 14 part un axe 15 vertical en acier, par exemple. Cet axe 15 part vers le bas et il est perpendiculaire à la barre 14.

De plus, les tuyaux 10,11 portent à l'arrière des deux coudes horizontaux qui aboutissent aux orifices 12,13 (figure 1), des moteurs électriques 59,60 actionnant chacun une aiguille située dans la partie finale des tuyaux 10,11, qui sert, le cas échéant, à la fermeture des orifices 12,13.

Face aux deux orifices 12,13 (figures 1,2) des tuyaux 10,11, se trouvent des pales 16. Ces pales 16 sont identiques à celles qui équipent les turbines Pelton, c'est-à-dire qu'elles sont formées de deux moitiés en cuiller, reliées par leur bord le plus long. Le jet d'eau vient frapper l'arête ainsi formée suivant une trajectoire perpendiculaire à ladite arête. De plus, ces pales 16 sont tournées vers l'intérieur du cercle qu'elles forment, c'est-à-dire que les échancrures qui divisent leurs deux moitiés sont orientées vers le centre du cercle formé par les pales 16, et non vers l'extérieur.

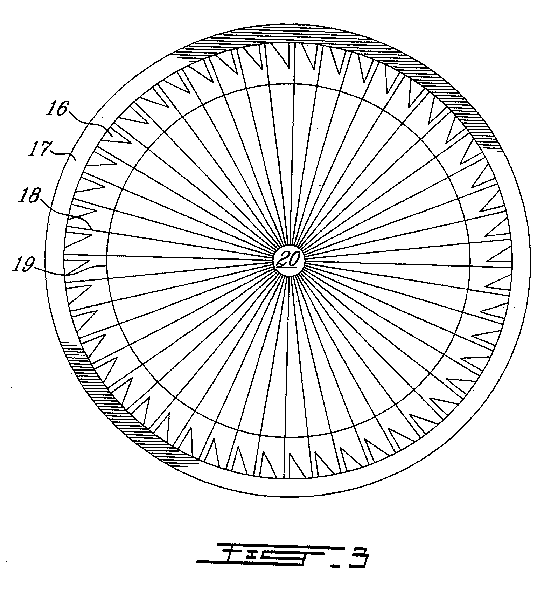

Les pales 16 sont portées par des supports 17 (figures 1,2,3) qui, réunis en étant soudés, par exemple, forment un cercle (figures 1,3). Entre les supports 17 et la première structure 5 se trouvent des roulements 23 (figures 1,2). Les supports 17 sont portés par des rayons 18 (figures 1,2,3) qui convergent vers le centre du cercle formé par les supports, sans l'atteindre pour autant. Sur la plus grande partie de leur longueur, en partant du centre du cercle vers lequel convergent les rayons 18, ces rayons 18 sont portés par une couronne circulaire 19 (figures 2,3), faite d'acier par exemple.

Le petit cercle 20 (figure 3) de la couronne circulaire 19, porte un cylindre creux 21, fait en acier par exemple (figure 2), qui est fixé orthogonalement à la couronne circulaire 19 et qui va vers le bas. Le diamètre de ce cylindre creux 21 doit être assez grand pour laisser passer l'axe 15 librement et aussi pour contenir les épaulements intérieurs et les roulements destinés à rendre plus facile la rotation simultanée - et en sens inverse - de l'axe 15 et du cylindre creux 21.

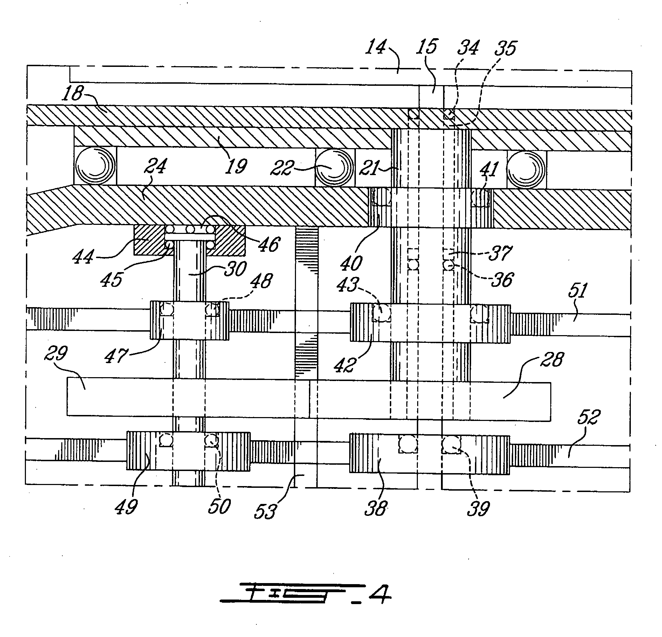

La couronne circulaire 19 est portée par des roulements 22 concentriques (figures 2,4) qui facilitent sa rotation et assurent sa stabilité. Les roulements 22 sont eux-mêmes portés par une deuxième structure 24 (figures 2,4), qui est en acier par exemple. La deuxième structure 24 est contenue dans la première structure 5 ; elle est de forme cylindrique avec un plafond horizontal qui supporte les roulements 22. La jonction entre la partie verticale et la partie horizontale de la structure 24 (figure 2) ne se fait pas à angle droit, mais par une petite partie du plafond allant en pente vers la partie verticale. Le plafond de la deuxième structure 24 est percé d'une ouverture circulaire suffisante pour laisser passer le cylindre creux 21, et aussi pour contenir un élément de fixation que nous verrons plus loin.

A son extrémité inférieure, l'axe 15 (figure 2) entre dans une première boîte multiplicatrice d'engrenages 25, dont le support n'est pas montré, et qui actionne par un axe 26 le rotor d'un premier générateur 27. Les éléments destinés à stabiliser les différents axes utilisés dans la machine selon l'invention seront présentés plus loin.

Quant au cylindre creux 21, il porte à son extrémité inférieure une première roue dentée 28 (figure 2). La première roue dentée 28 actionne une deuxième roue dentée 29, qui est solidaire en son centre d'un axe 30 soutenu par un dispositif que nous verrons plus loin. L'axe 30 actionne une deuxième boîte multiplicatrice d'engrenages 31, dont le support n'est pas montré, qui à son tour, et grâce à un axe 32, actionne le rotor d'un deuxième générateur 33.

La stabilisation des différents axes utilisés dans la machine selon l'invention, qui concourent à la production de courant électrique, est assurée de la manière suivante. Il est à noter que les différents épaulements et roulements utilisés à ce effet, bien que contenus dans des bâtis en acier, sont représentés en traits continus, pour la clarté de la lecture des figures.

L'axe 15 (figure 4) est guidé dans sa rotation, à l'intérieur du cylindre creux 21, par deux roulements : un roulement 34 porté par un épaulement 35 intérieur, et un autre roulement 36 forcé sur un autre épaulement 37 intérieur.

De plus, une fois sorti du cylindre creux 21, l'axe 15 est maintenu par un bâti cylindrique en acier 38 (figure 4) qui contient un épaulement intérieur et un roulement 39.

En ce qui concerne le cylindre creux 21, sa stabilisation est assurée de la manière suivante. Dans le plafond de la deuxième structure 24, le cylindre creux 21 passe dans un bâti cylindrique en acier 40 (figure 4) contenant un épaulement intérieur et un roulement 41. De plus, et avant d'arriver à la première roue dentée 28, le cylindre creux passe aussi par un autre bâti cylindrique en acier 42 qui contient également un épaulement intérieur et un roulement 43.

Quant à l'axe 30 (figure 4), il est soutenu de la manière suivante. L'extrémité supérieure de l'axe 30 se termine comme celle d'un clou à tête plate. Cette tête aplatie prend place dans un bâti cylindrique en acier 44 contenant un épaulement intérieur qui soutient un roulement 45. En outre, entre l'extrémité aplatie de l'axe 30 et le plafond de la deuxième structure 24 se trouve une butée 46 à billes, par exemple, qui facilite la rotation de l'axe 30. Il est probable que les différents éléments de cette fixation devront être assemblés avant d'être installés.

Puis l'axe 30, avant d'entrer dans la deuxième roue dentée 29, dont il est solidaire, passe par un bâti cylindrique en acier 47 qui contient un épaulement intérieur et un roulement 48. De même, après être sorti de la deuxième roue dentée 29 et avant d'atteindre la deuxième boîte multiplicatrice d'engrenages 31, l'axe 30 passe par un autre bâti cylindrique en acier 49 qui contient un épaulement intérieur et un roulement 50.

Le support des bâtis cylindriques en acier 42,47 est assuré par une barre d'acier 51 horizontale fixée sur les parois de la deuxième structure 24. Les bâtis cylindriques en acier 38,49 sont soutenus par une autre barre d'acier 52 horizontale, parallèle à la barre 51, placée en dessous d'elle, et également fixée sur les parois de la deuxième structure 24.

A leur tour, les deux barres d'acier 51,52 horizontales sont renforcées par deux barres d'acier 53,54 (figure 2) verticales qui vont du plafond au sol de la deuxième structure 24.

Enfin, la machine selon l'invention comprend également :
- deux cercles métalliques 55,56 (figure 2) accrochés aux poutres 4, avec l'isolant nécessaire, auxquels font face deux brosses métalliques 57,58 pour recevoir du courant électrique venant d'une source de courant électrique - non montrée -, dans le but d'alimenter par des câbles électriques - non montrés également - en courant électrique les systèmes de fermeture à aiguille 59,60 portés par les tuyaux 10,11, à l'arrière de leur coude horizontal (figure 1) ;
- des ouvertures 61 (figure 2) situées entre la première structure 5 et la deuxième structure 24, au niveau du sol, pour assurer l'évacuation, à travers des canalisations, de l'eau utilisée pendant la marche de la machine selon l'invention, eau dont l'écoulement aura été facilité par la partie inclinée de la deuxième structure 24.

La machine selon l'invention fonctionne de la manière suivante. L'eau, captée à une hauteur suffisante pour faire fonctionner une turbine Pelton, arrive à la machine selon l'invention par le tuyau 1 fixe. Puis elle passe à travers le joint rotatif 2 et ensuite dans les tuyaux 10,11. En sortant des orifices 12,13 de ces tuyaux 10,11, suivant deux directions parallèles et opposées, l'eau provoque la rotation des tuyaux 10,11, ainsi que celle du lest 8, de la barre 14 horizontale et de l'axe 15 vertical que cette barre 14 porte en son centre. Les tuyaux 10,11, le lest 8, la barre 14 horizontale et l'axe 15, forment le premier système rotatif.

Dans le même temps, l'eau sortant des orifices 12,13 des tuyaux 10,11 à une certaine vitesse frappe les pales 16 et provoque la rotation des éléments dépendant de ces pales 16, c'est-à-dire les supports 17, les rayons 18 avec la couronne circulaire 19 et le cylindre creux 21 qui lui est perpendiculaire. Les pales 16, les supports 17, les rayons 18 avec la couronne circulaire 19 et le cylindre creux 21 forment le deuxième système rotatif.

Toutefois, comme les deux systèmes rotatifs tournent en sens contraire, il faut que le premier de ces systèmes soit ralenti, tout en conservant sa puissance, pour que le deuxième système puisse profiter d'une manière efficace des jets d'eau venant des orifices 12,13 des tuyaux 10,11. C'est le rôle du lest 8 porté par la plate-forme 7 de la colonne 6 grâce aux roulements 9. Ce lest 8 doit être assez pesant pour que le premier système rotatif acquiert un mouvement circulaire uniforme et lent. A titre de comparaison, on pourrait penser à la vitesse de rotation des hélices des grandes éoliennes qui produisent du courant électrique dans une plage de fonctionnement allant de neuf à dix-neuf tours par minute.

Avec le ralentissement de la vitesse de rotation du premier ensemble rotatif, les jets d'eau sortant des orifices 12,13 des tuyaux 10,11 frappent les pales 16 avec plus de force, ce qui permet d'augmenter la production d'électricité du deuxième ensemble rotatif.

Lorsque le premier système rotatif tourne sous l'effet de l'eau sortant des tuyaux 10,11, l'axe 15 qui fait partie du premier système tourne également et la première boîte multiplicatrice d'engrenages 25, dans laquelle l'axe 15 aboutit, augmente la vitesse de rotation de son axe de sortie 26 jusqu'au niveau désiré. L'axe 26 étant solidaire du rotor du premier générateur 27, sa rotation entraîne une première production de courant électrique.

En outre, lorsque le deuxième système rotatif tourne, le cylindre creux 21 qui en fait partie, tourne également et fait tourner la première roue dentée 28 dont il est solidaire. En tournant cette première roue dentée fait tourner la deuxième roue dentée 29 et l'axe 30 qui en est solidaire et qui aboutit dans la deuxième boîte multiplicatrice d'engrenages 31. Cette deuxième boîte multiplicatrice d'engrenages 31 augmente la vitesse de rotation de son axe de sortie 32 jusqu'au niveau désiré. L'axe 32 étant solidaire du rotor du deuxième générateur 33, sa rotation entraîne une deuxième production de courant électrique.

Ainsi, sous l'effet du même jet d'eau, les deux systèmes rotatifs, indépendants l'un de l'autre, produisent chacun de l'électricité.

La production totale de courant électrique de la machine selon l'invention est égale à la somme de la production électrique des deux générateurs 27,33.

## Revendications

1. Machine électrique **caractérisée en ce qu'**elle comprend :
• deux ensembles rotatifs distincts, tournant simultanément dans deux directions opposées sous l'effet d'un même jet d'eau :
- un premier ensemble, étant soutenu par une première structure (5), cylindrique au moins dans sa partie supérieure et qui est faite en acier par exemple, et comprenant des plates-formes (7) portées, grâce à des roulements (9), par des colonnes (6) descendant de poutres (4), et soutenant des tuyaux (10,11), alimentés en eau par le tuyau d'arrivée d'eau (1), muni d'un joint rotatif (2), et coudés dans leur partie horizontale pour orienter les jets d'eau qui sortent de leurs orifices (12,13) suivant deux directions parallèles et opposées, les tuyaux (10,11) étant solidaires de lests (8) et d'une barre (14) en acier portant en son centre un axe (15) en acier, partant perpendiculairement en direction du bas, pour actionner un premier générateur électrique (27);
- un deuxième ensemble, porté par une deuxième structure (24), comprise dans la première structure (5), et portant des roulements (22) sur lesquels tourne une couronne métallique circulaire (19) soutenant des rayons (18) sur la majeure partie de leur longueur à partir de son centre , sur lesquels sont fixés des supports (17) réunis en cercle, s'appuyant par des roulements (23) sur la paroi verticale de la première structure (5), et portant des pales (16) orientées vers le centre du cercle qu'elles forment et situées en regard des orifices (12,13) des tuyaux (10,11), la couronne circulaire (19) portant également, fixé perpendiculairement à son cercle central (20), un cylindre creux (21) qui va vers le bas et actionne un deuxième générateur électrique (33);
- le cylindre creux (21) ayant un diamètre interne suffisamment grand pour laisser passer librement l'axe (15) et pour loger des épaulements internes (35,37) et des roulements (34,36) guidant la rotation dudit axe (15), et passant lui-même à travers le plafond de la deuxième structure (24) par une ouverture circulaire en son centre, assez grande pour contenir un élément cylindrique en acier (40) portant un roulement (41), le plafond de la deuxième structure (24) étant relié au corps vertical par des pentes légères proches de ses bords;
- l'axe (15) actionnant une première boîte multiplicatrice d'engrenages (25), dont l'axe de sortie (26) actionne le rotor d'un premier générateur (27);
- le cylindre creux (21) actionnant une première roue dentée (28) qui actionne à son tour une deuxième roue dentée (29) solidaire d'un axe (30),au sommet aplati, porté par un élément cylindrique en acier (44), fixé au plafond de la deuxième structure (24) grâce à un épaulement intérieur et à un roulement (45), une butée à billes (46) séparant la tête aplatie de l'axe (30) du plafond de la deuxième structure (24);
- l'axe (30) actionnant à son tour une deuxième boîte multiplicatrice d'engrenages (31) dont l'axe de sortie (32) actionne le rotor d'un deuxième générateur (33);
• des moyens de stabilisation comprenant :
- une première barre horizontale (51) destinée à assurer la stabilité des bâtis (42,47), le bâti (42) comprenant un premier roulement (43) destiné à guider la rotation du cylindre creux (21), et le bâti (47) comprenant un deuxième roulement (48) destiné à guider la rotation de l'axe (30);
- une deuxième barre horizontale (52) destinée à assurer la stabilité des bâtis (38,49), le bâti (38) comprenant un premier roulement (39) destiné à guider la rotation du cylindre creux (15), et le bâti (49) comprenant un deuxième roulement (50) destiné à guider la rotation de l'axe (30);
- des barres verticales (53,54) qui viennent renforcer la stabilité des barres horizontales (51,52);
• des moyens électriques connectés à deux rails métalliques (55,56) conducteurs portés sous les poutres (4), avec lesquels les brosses (57,58) métalliques, portées par des tiges montées sur le tuyau (10) sont en contact pour alimenter des systèmes de fermeture à aiguilles (59,60) se trouvant derrière les coudes horizontaux des tuyaux (10,11);
• des ouvertures (61) situées entre la première structure (5) et la deuxième structure (24),au niveau du sol, pour assurer l'évacuation, à travers des canalisations,de l'eau utilisée pendant la marche de la machine selon l'invention.

2. Machine, selon la revendication 1, **caractérisée en ce qu'**elle comprend des pales (16) orientées vers le centre du cercle qu'elles forment.

3. Machine, selon la revendication 1, **caractérisée en ce que** les pales (16) sont portées par des supports (17), eux-mêmes portés par des rayons (18) soutenus par une couronne circulaire (19) en acier.

4. Machine, selon la revendication 1, **caractérisée en ce que**, sur le petit cercle (20) de la couronne circulaire (19), se trouve fixé un cylindre creux (21), orienté vers le bas perpendiculairement à la couronne circulaire (19), et qui permet la rotation libre de l'axe (15) allant de la barre horizontale (14) à la première boîte multiplicatrice d'engrenages (25).

5. Machine, selon la revendication 1, **caractérisée en ce qu'**elle comprend des poutres (4) soutenues par une première structure (5), cylindrique au moins dans sa partie supérieure, et une deuxième structure (24), contenue dans la première structure (5), et qui porte des roulements (22) qui facilitent la rotation de l'ensemble formé par les pales (16), les supports (17), les rayons (18), la couronne circulaire (19) en acier, le cylindre creux (21), orienté vers le bas perpendiculairement à la couronne circulaire (19), et l'axe (15) allant de la barre horizontale (14) à la première boîte multiplicatrice d'engrenages (25).

## Patentansprüche

1. Elektrische Maschine, **dadurch gekennzeichnet, dass** sie umfasst:
• zwei unterschiedliche Rotationseinheiten, die unter der Einwirkung eines selben Wasserstrahls gleichzeitig in zwei entgegengesetzte Richtungen drehen:
- eine erste Einheit, die von einer ersten Struktur (5) gestützt wird, die mindestens in ihrem oberen Teil zylindrisch ist und die beispielsweise aus Stahl gefertigt ist und Plattformen (7) umfasst, die dank Lagern (9) von Säulen (6), die von Balken (4) abgehen, getragen werden, und Rohre (10, 11) stützt, die von der mit einer rotierenden Dichtung (2) ausgestatteten Wasserzufuhrleitung (1) mit Wasser versorgt werden, und in ihrem horizontalem Teil gekrümmt sind, um die aus ihren Öffnungen (12, 13) austretenden Wasserstrahlen in zwei parallele und entgegengesetzte Richtungen zu lenken, wobei die Rohre (10, 11) mit Ballasten (8) und mit einer Stahlstange (14) fest verbunden sind, die in ihrem Zentrum eine Stahlwelle (15) trägt, die senkrecht nach unten verläuft, um einen ersten Stromgenerator (27) anzutreiben,
- eine zweite Einheit, die von einer zweiten Struktur (24) getragen wird, die in der ersten Struktur (5) enthalten ist, und Lager (22) trägt, auf denen ein kreisförmiger Metallkranz (19) dreht, der ab seinem Zentrum über den größten Teil ihrer Länge Speichen (18) stützt, auf denen kreisförmig vereinte Unterlagen (17) befestigt sind, die sich anhand von Lagern (23) auf der vertikalen Wand der ersten Struktur (5) abstützen und Schaufeln (16) tragen, die zum Zentrum des Kreises, den sie bilden, ausgerichtet sind und sich gegenüber Öffnungen (12,13) der Rohre (10, 11) befinden, wobei der kreisförmige Kranz (19) ebenfalls, senkrecht auf seinem zentralen Kreis (20) befestigt, einen hohlen Zylinder (21) trägt, der nach unten führt und einen zweiten Stromgenerator (33) antreibt,
- wobei der hohle Zylinder (21) einen Innendurchmesser hat, der ausreichend groß ist, um die Welle (15) frei hindurchzulassen und um interne Absätze (35, 37) und Lager (34,36) aufzunehmen, die die Rotation der Welle (15) führen, und der selbst durch die Decke der zweiten Struktur (24) durch eine kreisförmige Öffnung in ihrem Zentrum hindurchgeht, die ausreichend groß ist, um ein zylindrisches Element aus Stahl (40) zu enthalten, das ein Lager (41) trägt, wobei die Decke der zweiten Struktur (24) mit dem vertikalen Körper anhand leichter Schrägen in der Nähe ihrer Ränder verbunden ist,
- wobei die Welle (15) ein erstes Getriebe (25) antreibt, dessen Ausgangswelle (26) den Rotor eines ersten Generators (27) antreibt,
- wobei der hohle Zylinder (21) ein erstes Zahnrad (28) antreibt, das wiederum ein zweites Zahnrad (29) antreibt, das mit einer Welle (30) fest verbunden ist, die an der abgeflachten Spitze von einem zylindrischen Element aus Stahl (44) getragen wird, das an der Decke der zweiten Struktur (24) mittels eines inneren Absatzes und eines Lagers (45) befestigt ist, wobei ein Kugelanschlag (46) den abgeflachten Kopf der Welle (30) von der Decke der zweiten Struktur (24) trennt,
- wobei die Welle (30) ihrerseits ein zweites Getriebe (31) antreibt, dessen Ausgangswelle (32) den Rotor eines zweiten Generators (33) antreibt,
• Stabilisierungsmittel, die umfassen:
- eine erste horizontale Stange (51), die bestimmt ist, die Stabilität der Gestelle (42, 47) zu sichern, wobei das Gestell (42) ein erstes Lager (43) umfasst, das bestimmt ist, die Rotation des hohlen Zylinders (21) zu führen, und das Gestell (47) ein zweites Lager (48) umfasst, das bestimmt ist, die Rotation der Welle (30) zu führen,
- eine zweite horizontale Stange (52), die bestimmt ist, die Stabilität der Gestelle (38, 49) zu sichern, wobei das Gestell (38) ein erstes Lager (39) umfasst, das bestimmt ist, die Rotation des hohlen Zylinders (15) zu führen, und das Gestell (49) ein zweites Lager (50) umfasst, das bestimmt ist, die Rotation der Welle (30) zu führen,
- vertikale Stangen (53, 54), die die Stabilität der horizontalen Stangen (51, 52) verstärken,
• elektrische Mittel, die mit zwei leitenden Metallschienen (55, 56) verbunden sind, die unter den Balken (4) getragen werden, mit denen die Metallbürsten (57, 58), die von Stangen getragen werden, die auf dem Rohr (10) montiert sind, im Kontakt sind, um Nadelverschlusssysteme (59, 60) zu versorgen, die sich hinter den horizontalen Krümmungen der Rohre (10, 11) befinden,
• Öffnungen (61), die sich zwischen der ersten Struktur (5) und der zweiten Struktur (24) im Bereich des Bodens befinden, um die Ableitung des während des Betriebs der erfindungsgemäßen Maschine verwendeten Wassers durch Kanalisationen zu sichern.

2. Maschine nach Anspruch 1, **dadurch gekennzeichnet, dass** sie Schaufeln (16) umfasst, die zum Zentrum des Kreises gerichtet sind, den sie bilden.

3. Maschine nach Anspruch 1, **dadurch gekennzeichnet, dass** die Schaufeln (16) von Unterlagen (17) getragen werden, die selbst von Speichen (18) getragen werden, die von einem kreisförmigen Kranz (19) aus Stahl gestützt sind.

4. Maschine nach Anspruch 1, **dadurch gekennzeichnet, dass** sich auf dem kleinen Kreis (20) des kreisförmigen Kranzes (19) ein hohler Zylinder (21) befestigt befindet, der senkrecht zum kreisförmigen Kranz (19) nach unten gerichtet ist und der die freie Rotation der Welle (15) erlaubt, die von der horizontalen Stange (14) bis zum ersten Getriebe (25) reicht.

5. Maschine nach Anspruch 1, **dadurch gekennzeichnet, dass** sie Balken (4) umfasst, die von einer ersten Struktur (5) gestützt werden, die mindestens in ihrem oberen Teil zylindrisch ist, und eine zweite Struktur (24), die in der ersten Struktur (5) enthalten ist und die Lager (22) trägt, die die Rotation der Einheit erleichtert, die von Schaufeln (16), den Unterlagen (17), den Speichen (18), dem kreisförmigen Kranz (19) aus Stahl, dem hohlen Zylinder (21), der senkrecht zum kreisförmigen Kranz (19) nach unten gerichtet ist, und der Welle (15), die von der horizontalen Stange (14) bis zum ersten Getriebe (25) reicht, gebildet ist.

## Claims

1. An electric machine, **characterized in that** it comprises:
• two separate rotary assemblies, rotating simultaneously in two opposite directions under the effect of one and the same jet of water:
- a first assembly, supported by a first structure (5) that is cylindrical at least in its upper part and that is made for example of steel, and comprising platforms (7) carried, via rolling bearings (9), by columns (6) extending down from beams (4) and supporting pipes (10, 11), supplied with water by the water inlet pipe (1), equipped with a rotary seal (2), and bent in their horizontal part to orient the jets of water emerging from their orifices (12, 13) in two parallel and opposite directions, the pipes (10, 11) being secured to ballasts (8) and to a steel bar (14) which, at its center, carries a steel shaft (15) extending at right angles downward to drive a first electric generator (27);
- a second assembly, carried by a second structure (24), contained within the first structure (5) and carrying rolling bearings (22) on which there rotates a circular metal ring (19) supporting spokes (18) over most of their length from the center thereof, to which spokes there are attached supports (17) joined together in a circle, resting via rolling bearings (23) on the vertical wall of the first structure (5) and carrying blades (16) directed toward the center of the circle that they form and situated facing the orifices (12, 13) of the pipes (10, 11), the circular ring (19) also carrying, fixed at right angles to its central circle (20), a hollow cylinder (21) which extends downward and drives a second electric generator (33);
- the hollow cylinder (21) having an internal diameter large enough to allow the shaft (15) to pass freely through it and to house internal shoulders (35, 37) and rolling bearings (34, 36) that guide the rotation of said shaft (15) and itself passing through the roof of the second structure (24) via a circular opening at the center thereof that is large enough to contain a cylindrical steel element (40) carrying a rolling bearing (41), the roof of the second structure (24) being connected to the vertical body by slight inclines near the edges thereof;
- the shaft (15) driving a first step-up gearbox (25) the output shaft (26) of which drives the rotor of a first generator (27);
- the hollow cylinder (21) driving a first gearwheel (28) which in turn drives a second gearwheel (29) secured to a shaft (30), with a flattened top, carried by a cylindrical steel element (44) attached to the roof of the second structure (24) via an interior shoulder and a rolling bearing (45), a thrust ball bearing (46) separating the flattened head of the shaft (30) from the roof of the second structure (24);
- the shaft (30) in turn driving a second step-up gearbox (31) the output shaft (32) of which drives the rotor of a second generator (33);
• stabilizing means comprising:
- a first horizontal bar (51) intended to ensure the stability of the frameworks (42, 47), the framework (42) comprising a first rolling bearing (43) intended to guide the rotation of the hollow cylinder (21), and the framework (47) comprising a second rolling bearing (48) intended to guide the rotation of the shaft (30);
- a second horizontal bar (52) intended to ensure the stability of the frameworks (38, 49), the framework (38) comprising a first rolling bearing (39) intended to guide the rotation of the hollow cylinder (15), and the framework (49) comprising a second rolling bearing (50) intended to guide the rotation of the shaft (30);
- vertical bars (53, 54) which enhance the stability of the horizontal bars (51, 52);
• electrical means connected to two conductive metal rails (55, 56) carried under the beams (4) and with which the metal brushes (57, 58) carried by rods mounted on the pipe (10) are in contact in order to power needle-type shutoff systems (59, 60) located behind the horizontal elbows of the pipes (10, 11);
• openings (61) situated between the first structure (5) and the second structure (24), at ground level, to allow the water used while the machine according to the invention is running to be discharged through the pipelines.

2. The machine as claimed in claim 1, **characterized in that** it comprises blades (16) directed towards the center of the circle that they form.

3. The machine as claimed in claim 1, **characterized in that** the blades (16) are carried by supports (17), themselves carried by spokes (18) supported by a circular steel ring (19).

4. The machine as claimed in claim 1, **characterized in that** attached to the small circle (20) of the circular ring (18) there is a hollow cylinder (21) directed downward at right angles to the circular ring (19) and that allows the shaft (15) extending from the horizontal bar (14) to the first step-up gearbox (25) to rotate freely.

5. The machine as claimed in claim 1, **characterized in that** it comprises beams (4) supported by a first structure (5) that is cylindrical at least in its upper part, and a second structure (24) contained within the first structure (5) and which carries rolling bearings (22) that facilitate the rotation of the assembly made up of the blades (16), the supports (17), the spokes (18), the circular steel ring (19), the hollow cylinder (21) directed downward at right angles to the circular ring (19) and the shaft (15) extending from the horizontal bar (14) to the first step-up gearbox (25).
